# EUROPEAN PATENT SPECIFICATION

(11) **EP 3 390 477 B1**
(45) Date of publication and mention of the grant of the patent: **17.01.2024**
(21) Application number: 16837973.3
(22) Date of filing: 13.12.2016
(51) Int. Cl.: C08G 12/40

(54) **PROCESS FOR MANUFACTURING SOLUTIONS OF ALKYLATED AMINO FORMALDEHYDE RESINS HAVING A LOW FREE FORMALDEHYDE CONTENT**
VERFAHREN ZUR HERSTELLUNG VON LÖSUNGEN VON ALKYLIERTEN AMINO-FORMALDEHYDHARZEN MIT NIEDRIGEM FORMALDEHYDGEHALT
PROCÉDÉ DE FABRICATION DE SOLUTIONS DE RÉSINES AMINO-FORMALDÉHYDE ALKYLÉES AYANT UNE FAIBLE TENEUR EN FORMALDÉHYDE

(30) Priority: 16.12.2015 EP 15003582
(43) Date of publication of application: 24.10.2018
(73) Proprietor: prefere Melamines GmbH, 60386 Frankfurt am Main (DE)
(72) Inventor: SEIFERT, Guntmar, 68623 Lampertheim (DE); VÖLKER, Achim, 63069 Offenbach (DE); WONNER, Johann, 64850 Schaafheim (DE)
(74) Representative: Münch, Volker
(86) International application number: PCT/EP2016/002099
(87) International publication number: WO 2017/102076

(56) References cited:
- JP-A- S5 624 415
- JP-A- S5 634 764
- JP-A- H09 176 260

## Description

### Field of the Invention

The present invention relates to a process for manufacturing solutions of alkylated amino formaldehyde resins having a low free formaldehyde content.

Moreover, the present invention relates to the use of the solutions of alkylated amino formaldehyde resins manufactured in accordance with the process of the invention.

### Background of the Invention

Due to the reclassification of formaldehyde as being carcinogenic, it has become necessary to look for new ways to manufacture solutions of alkylated amino formaldehyde resins having a particularly low free formaldehyde content.

Processes for manufacturing solutions of alkylated amino formaldehyde resins are well-known in the art.

Thus, the American patent US 552,997 discloses a method for the preparation of solutions of butylated aminotriazine formaldehyde resins in xylene or butanol-xylene mixtures.

The British patent GB 724,972 also discloses a method for the preparation of solutions of butylated aminotriazine formaldehyde resins and their miscibility with mineral spirits, xylene and butanol.

The American patent US 2,918,452 discloses a method for the preparation of solutions of methylated and butylated aminotriazine formaldehyde resins in xylene.

The German published examined application 15 19 327 discloses the preparation of solutions of isobutylated aminotriazine formaldehyde resins in xylene-isobutanol mixtures.

Additionally, the American patent US 4,039,493 discloses the preparation of various mixed alkylated aminotriazine formaldehyde resins and their miscibility with xylene.

Moreover, the German patent application DE 10 2005 036 584 A1 discloses the preparation of various mixed alkylated aminotriazine formaldehyde resins, i.e. mixed ethers. According to page 7, paragraph [0089] of the application, the mixed ethers can be dissolved in any customary and known solvents. In the pages 7 to 8, paragraphs [0090] to [0105] various protic and aprotic solvents are listed. No mention is made as to whether the nature of the solvent has any influence on the formaldehyde content of the solutions. DE 10 2005 036 584 A1 recites free formaldehyde contents, however, these are the formaldehyde contents of the solid reaction products.

The Japanese patent application JP S56 24415 A discloses a process for reducing the formaldehyde content of an amino-formaldehyde condensate by adding an aqueous solution of an alkali sulfite which reacts with the free formaldehyde.

The Japanese patent application JP S56 34764 A discloses the addition of an amino compound to an etherified amino-formaldehyde resin at a specific ratio in order to react with the free formaldehyde in the resin. Benzene or an alcohol are used as the reaction solvents.

The Japanese patent application JP H09 176260 A discloses a process for producing low-molecular-weight amino-formaldehyde resins in high yields. The application remains silent regarding the free formaldehyde content of the said resins.

All the references cited above remain silent about the influence of solvents of different nature on the formaldehyde content of solutions of alkylated aminotriazine formaldehyde resins.

Therefore, it has been the object of the present invention to develop a simple but highly effective process for manufacturing solutions of alkylated amino formaldehyde resins.

The object is solved by the process for manufacturing solutions of alkylated amino formaldehyde resins as claimed in the independent claim 1. An advantageous embodiment can be taken from the dependent claim 2.

The use of the solutions of alkylated amino formaldehyde resins manufactured by the process as claimed in claim 1 or 2 is claimed in claim 3.

The process of the invention is directed to the manufacturing of solutions of alkylated amino formaldehyde resins having a free formaldehyde content of <0.5 % by weight, preferably <0.4% by weight and most preferably <0.3% by weight, the weight percentages being based on the complete weight of the solutions.

The alkyl groups of the alkylated amino formaldehyde resins are selected from the group consisting of methyl, n-butyl, and isobutyl groups.

The amino compound is selected from melamine and guanamine, preferably melamine and benzoguanamine.

in the first step of the process of the invention, at least one amino compound is methylolated either partially or completely meaning that only some or all of the amino groups present are reacted with formaldehyde to yield N-methylol groups (hydroxymethyl groups).

The conditions for the methylolation reactions have been described in detail in the prior art and need not be discussed here.

In the second step of the process of the invention, the methylolated amino compound is alkylated (etherified) with at least one monoalcohol selected from the group consisting of methanol, n-butanol and isobutanol.

The monoalcohol employed for the alkylation (etherification) can also serve as the solvent for the reactants.

Also, the conditions for the alkylation reactions have been described in detail in the prior art and need not to be discussed here.

In the third process step, the surplus monoalcohol and/ or solvent is or are removed quantitatively by vacuum distillation.

In the fourth step of the process of the invention, the remaining residue consisting of or consisting essentially of the alkylated amino formaldehyde resin is dissolved in xylene.

Without wishing to be bound by any theory it is believed that protic solvents like n-butanol or isobutanol can form semi-acetals with formaldehyde and, therefore, compete for the formaldehyde bound to the amino compound. When an aprotic solvent is used instead of an alcohol, no semi-acetals can be formed. The chemical equilibrium lies therefore primarily on the side of the formaldehyde bound to the amino compounds as methylol groups as intended.

The non-volatile content of the solutions prepared in accordance with the process of the invention can be from 60 to 95% by weight, based on the complete weight of the solution. However, higher or lower non-volatile contents are also possible, when they are particularly required for special purposes.

The solutions prepared in accordance with the process of the invention are excellently suited as crosslinkers for nucleophilic groups, as for example, hydroxyl, amino or sulfhydryl (-SH) groups containing binder resins for coatings.

The following examples are set forth as representative of the present invention. These examples are not to be construed as limiting the scope of the invention as these and other equivalent embodiments will be apparent in view of the present disclosure and the appended claims.

### Examples 1 to 4 and Comparative Experiments A to D

### Preparation Example

### General Procedure for Preparing Alkylated Benzoguanamine Formaldehyde Resins

Benzoguanamine, paraformaldehyde, n-butanol and formic acid (85%) were charged into a 2 L three necked flask with a stirrer, the reflux condenser, a thermometer and a heating bath. The mixture was heated up to the reaction temperature and held at this temperature for a defined period of time. Thereafter, the mixture was heated to reflux and the separation of water was started until a defined temperature was reached. The reaction mixture was neutralized and the pH value was adjusted with caustic soda. Thereafter, the solvent (n-butanol) was completely removed by vacuum distillation. The residue present was then diluted with xylene and adjusted to the desired non-volatile content.

### Example 1 and Comparative Experiment A

### The Preparation of Solutions of Butylated Benzoguanamine Formaldehyde Resins

### Example 1

In a three neck round bottom flask, 748 g of an alkylated benzoguanamine formaldehyde resin having a dynamic viscosity DIN EN ISO 3251 (cone & plate, 23°C) of 450 to 650 mPa.s, a density at 23°C of approximately 1.04 g/mL, a formaldehyde content DIN EN ISO 11402 4.3 of <1% by weight based on the complete weight of the resin, and a molecular weight distribution of 1.38 was diluted with 110 g xylene and filtered. The non-volatile content of the product was now about 80% by weight, based on the complete weight of the solution. After the addition of the final amount of xylene the non-volatile content was reduced to 70% by weight, based on the complete weight of the solution. The free formaldehyde content was measured to be only 0.06% by weight, based on the complete weight of the solution.

### Comparative Experiment A

Example 1 was repeated with the difference that n-butanol was used as the solvent. The free formaldehyde content of the solution was measured to be 0.63% by weight, based on the complete weight of the solution.

### Example 2

1,250 g of an alkylated benzoguanamine formaldehyde resin having a dynamic viscosity DIN EN ISO (cone & plate, 23°C) of 1000-2000, a formaldehyde content DIN EN ISO 114024.3 of <1%, based on the complete weight of the resin, at a molecular weight distribution of 1.2 were distilled under a vacuum of 150 mbar until a temperature of 110°C was reached. After cooling down, 176 g of o-xylene were added resulting in a non-volatile content of the resulting solution of 80% by weight, based on the complete weight of the solution. The free formaldehyde content was measured to be 0.05% by weight, based on the complete weight of the solution.

### Comparative Experiment B

Example 2 was repeated with the difference that n-butanol was used as the solvent. The free formaldehyde content of the solution was measured to be 0.74% by weight, based on the complete weight of the solution.

### Example 3

1050 g of the mixture of an alkylated melamine formaldehyde resins and an alkylated benzoguanamine formaldehyde resin having a dynamic viscosity EN ISO 3219-B (cone & plate, 23°C) of 1000-3000 mPa.s, a free formaldehyde content DIN EN ISO 11402 4.3 of <1.3 and a molecular weight distribution of 1.3 were distilled in a vacuum of 150 mbar until a temperature of 110°C was reached. After cooling down, 176 g of o-xylene were added resulting in non-volatile content of the resulting solution of 80% by weight, based on the complete weight of the solution. The free formaldehyde content was measured to be 0.21% by weight, based on the complete weight of the solution.

### Comparative Experiment C

Example 3 was repeated with the difference that n-butanol was used as the solvent. The free formaldehyde content of the solution was measured to be 0.74% by weight, based on the complete weight of the solution.

### Example 4 and Comparative Example D

Melamine, paraformaldehyde, n-butanol and formic acid (85%) were charged into a 2 L three necked flask equipped with a stirrer, a reflux condenser, a thermometer and a heating bath. The mixture was heated up to a certain temperature and the separation of the water was started until a defined temperature was reached. The reaction mixture was neutralized and the pH value was adjusted with caustic soda. Then, the solvent n-butanol was removed quantitatively in vacuum. The residue was then diluted with xylene and adjusted to the desired non-volatile content.

2093 g of the residue having a non-volatile content of 98.6% by weight, based on the complete weight of the residue, was diluted with 882 g of xylene so that the non-volatile content of 65% by weight was achieved. The free formaldehyde of the solution was measured to be 0.28%, based on the complete weight of the solution.

### Comparative Experiment D

Example 4 was repeated with the difference that n-butanol was used as the solvent. The free formaldehyde content of the solution was measured to be 1.04% by weight, based on the complete weight of the solution.

## Claims

1. A Process for manufacturing solutions of alkylated amino formaldehyde resins having a free formaldehyde content of <0.5% by weight, based on the complete weight of the solution, wherein
(a) an amino compound selected from the group consisting of melamine and guanamine is methylolated,
(b) the methylolated amino compound is alkylated with at least one monoalcohol selected from the group consisting of methanol, n-butanol and isobutanol,
(c) the surplus monoalcohol is removed quantitatively by vacuum distillation, and
(d) the remaining residue consisting of or consisting essentially of the alkylated amino formaldehyde resin is dissolved in xylene.

2. The process of claim 1, wherein the alkyl residue is methyl and/or n-butyl and/or isobutyl.

3. A process according to claims 1 or 2 wherein the solution obtained is then used as a crosslinker for nucleophilic groups containing binder resins.

## Patentansprüche

1. Verfahren zur Herstellung von Lösungen von alkylierten Aminoformaldehydharzen mit einem Gehalt an freiem Formaldehyd von <0,5 Gew.-%, bezogen auf das Gesamtgewicht der Lösung, wobei
(a) eine Aminoverbindung ausgewählt aus der Gruppe bestehend aus Melamin und Guanamin methyloliert wird,
(b) die methylolierte Aminoverbindung mit mindestens einem Monoalkohol, ausgewählt aus der Gruppe, bestehend aus Methanol, n-Butanol und Isobutanol, alkyliert wird,
(c) der überschüssige Monoalkohol durch Vakuumdestillation quantitativ entfernt wird, und
(d) der verbleibende Rückstand, der aus dem alkylierten Aminoformaldehydharz besteht oder im Wesentlichen daraus besteht, in Xylol gelöst wird.

2. Verfahren nach Anspruch 1, **dadurch gekennzeichnet, dass** der Alkylrest Methyl und/oder n-Butyl und/oder Isobutyl ist.

3. Verwendung der nach Anspruch 1 oder 2 hergestellten Lösung als Vernetzer für nukleophile Gruppen enthaltende Bindemittelharze.

## Revendications

1. Procédé de préparation de solutions de résines aminoformaldéhyde alkylées ayant une teneur en formaldéhyde libre < 0,5 % en poids, par rapport au poids total de la solution, dans lequel
(a) un composé aminé choisi dans le groupe constitué par la mélamine et la guanamine est méthylolé,
(b) le composé aminé méthylolé est alkylé avec au moins un monoalcool choisi dans le groupe constitué par le méthanol, le n-butanol et l'isobutanol,
(c) le monoalcool en excès est éliminé quantitativement par distillation sous vide, et
(d) le résidu restant, qui consiste en ou est essentiellement constitué de la résine aminoformaldéhyde alkylée, est dissous dans le xylène.

2. Procédé selon la revendication 1, dans lequel le radical alkyle est le méthyle et/ou le n-butyle et/ou l'isobutyle.

3. utilisation de la solution préparée selon la revendication 1 ou 2 comme agent de réticulation pour des résines liantes contenant des groupes nucléophiles.
